# EUROPEAN PATENT APPLICATION

(11) **EP 2 365 361 A1**
(43) Date of publication of application: **14.09.2011**
(21) Application number: 11002018.7
(22) Date of filing: 10.03.2011
(51) Int. Cl.: G02B 5/00, G02B 5/02, H05K 9/00, G02B 27/26

(54) **Front plate for display, display device, and method and apparatus for manufacturing front plate dor display**

(30) Priority: 10.03.2010 JP 2010053688; 04.02.2011 JP 2011023360
(71) Applicant: ASAHI GLASS COMPANY, LIMITED, Chiyoda-ku, Tokyo 100-8405 (JP)
(72) Inventor: Kamikawa, Makoto, Tokyo 100-8405 (JP); Satake, Hideya, Tokyo 100-8405 (JP); Sasaki, Koji, Tokyo 100-8405 (JP); Fukawa, Makoto, Tokyo 100-8405 (JP); Tada, Masahiko, Tokyo 100-8405 (JP); Etoh, Kazuo, Tokyo 100-8405 (JP)
(74) Representative: Müller-Boré & Partner Patentanwälte

(57) **Abstract**

The present invention relates to a front plate for a display comprising: a glass substrate having a first surface and a second surface; and a ceramic layer formed on at least a part of a marginal area of the second surface, wherein the front plate has a difference (ΔT) between a maximum light amount Tₘₐₓ and a minimum light amount Tₘᵢₙ of transmitted light of 0.4% or smaller, wherein the light amount of transmitted light is measured in a measurement system comprising: a liquid crystal panel that is made to be of entire-surface white-light emission state and is emitting the white light with polarization; a polarizing plate that is set in a crossed Nicol condition with respect to the polarized white light emitted from the liquid crystal panel; and a brightness measurement device arranged in this order, wherein the front plate is disposed between the liquid crystal panel and the polarizing plate so that the second surface faces the liquid crystal panel, while setting the distance between the liquid crystal panel and the front plate to be 50 mm and the distance between the front plate and the brightness measurement device to be 1 m, and wherein the measurement of the transmitted light amount is carried out by measuring the light amount of light transmitted from through the front plate and the polarizing plate over the entire surface of the front plate by the brightness measurement device, and the light amounts in the absence of the front plate under a crossed Nicol condition and a parallel Nicol condition are taken as 0% and 100%, respectively.

## Description

The present invention relates to a front plate that is disposed on the front surface of a display and the like.

In FPD (Flat Panel Display) devices such as liquid crystal displays (LCDs), plasma display panels (PDPs) and organic EL (electroluminescent) displays (OELDs) applied to flat-screen televisions and the like, a glass-made front plate also called a "front filter" is disposed on the front surface of the display panel. This front plate is disposed mainly for purposes such as preventing reflection of ambient light, improving the strength of the FPD and preventing impact failure of the FPD. In normal cases, the front plate has an antireflection film on each surface thereof. Moreover, to improve strength, the front plate undergoes a heating-cooling heat treatment process (reinforcement process) during its manufacture.

However, there are cases where warpages, undulations and the like generate on a front plate having undergone the heat treatment process. Therefore, there has been disclosed a technique suppressing the amount of warpages of the front plate after heating-cooling process, by adjusting the surface compression stress of the glass substrate in a range of 20 to 70 MPa (Patent Reference 1).

Patent Reference 1: JP 2002-91326A

Recent front plates have been coming to be provided with a function for decorating the FPD device, for example, coloring a marginal area of the front plate in white, black or the like so that the device looks simple in design. Normally, such front plates having the decoration function in a marginal area are manufactured by the following process: An ink containing an organic component and ceramic particles is printed along the marginal part of the glass substrate. The glass substrate is heated to thereby eliminate the organic component and sinter the ceramic particles together. Then, the glass substrate is cooled.

However, with such a front plate manufacturing method, there are cases where a stress strain distribution (non-uniformity) occurs within the surface of the front plate after manufacture. Moreover, such stress strain "non-uniformity" within the surface of the front plate may lead to a problem that the condition of the polarized light output from the display panel is disturbed at the time of transmission through the front plate, and this increases the possibility of the occurrence of so-called "output polarized light disturbance".

With the above-described method as shown in Patent Reference 1, even if the warpages and undulations of the front plate can be suppressed, such stress strain "non-uniformity" generated within the surface of the front plate is not assumed, and therefore, the "output polarized light disturbance" cannot be suppressed by this method.

In particular, it is expected that FPD devices having a so-called "3D (three-dimensional)" function will become widespread in the future. However, for the FPD devices having the 3D (three-dimensional) function, it is necessary for the images (lights) for the left eye and the right eye to be viewed by the left eye and the right eye, respectively, through a polarizing plate that transmits only desired polarized light. At this time, if an output polarized light disturbance attributed to the front plate occurs, light of other than predetermined polarization enters the polarizing plate, or light of the predetermined polarization does not enter the polarizing plate, so that there is a possibility that an appropriate image cannot be viewed by the respective eye. That is, in the FPD devices having the 3D (three-dimensional) function, the influence of the presence of the stress strain "non-uniformity" within the surface of the front plate is more significant, so that even a slight output polarized light disturbance occurring on the front plate can degrade image quality or cause a conspicuous image disturbance.

The present invention has been made in view of such a background, and an object thereof is to provide a front plate for a display in which the occurrence of an output polarization disturbance is significantly suppressed.

The present invention provides a front plate for a display comprising: a glass substrate having a first surface and a second surface; and a ceramic layer formed on at least a part of a marginal area of the second surface, wherein the front plate has a difference (ΔT) between a maximum light amount Tₘₐₓ and a minimum light amount Tₘᵢₙ of transmitted light of 0.4% or smaller,
wherein the light amount of transmitted light is measured in a measurement system comprising:
a liquid crystal panel that is made to be of entire-surface white-light emission state and is emitting the white light with polarization;
a polarizing plate that is set in a crossed Nicol condition with respect to the polarized white light emitted from the liquid crystal panel; and
a brightness measurement device arranged in this order,
wherein the front plate is disposed between the liquid crystal panel and the polarizing plate so that the second surface faces the liquid crystal panel, while setting the distance between the liquid crystal panel and the front plate to be 50 mm and the distance between the front plate and the brightness measurement device to be 1 m, and
wherein the measurement of the transmitted light amount is carried out by measuring the light amount of light transmitted from through the front plate and the polarizing plate over the entire surface of the front plate by the brightness measurement device, and the light amounts in the absence of the front plate under a crossed Nicol condition and a parallel Nicol condition are taken as 0% and 100%, respectively.

In the front plate of the present invention, the maximum value Tₘₐₓ of the amount of transmitted light may be 0.5 % or less.

In the front plate of the present invention, the second surface of the glass substrate has the ceramic layer formed throughout the entire marginal area thereof.

In the front plate of the present invention, the ceramic layer may be black.

The front plate of the present invention may have a functional film installed on at least one of the first surface and the second surface.

In the front plate of the present invention, the functional film may be an antireflection film installed on the first surface of the glass substrate.

Further, the present invention provides a display device comprising a display panel and a front plate disposed in front of the display panel,
wherein the front plate is the front plate according to the present invention, and
the front plate is disposed so that the second surface of the glass substrate faces the display panel.

The display devise of the present invention may have a 3D (three-dimensional) function.

In the display devise of the present invention, the display panel may comprise any one of a liquid crystal display, a plasma display and an organic electroluminescent display.

Further, the present invention provides a method for manufacturing a front plate for a display comprising a glass substrate and a ceramic layer that is formed on at least a part of a marginal area of the glass substrate, the method comprising:
(a) a step of preparing a glass substrate having a first surface and a second surface;
(b) a step of placing a composition containing ceramic particles, on at least a part of a marginal area of the second surface of the glass substrate;
(c) a step of forming the ceramic layer by heating the composition-placed glass substrate; and
(d) a step of cooling the ceramic layer-formed glass substrate so that the first surface is uniformly cooled.

In the manufacturing method of the present invention, the cooling step (d) is carried out in such a manner that the entire area of the first surface of the glass substrate undergoes substantially the same cooling history.

For example, in the manufacturing method of the present invention, the cooling step (d) is carried out in such a manner that the entire area of the first surface of the glass substrate is brought into contact with a cooling member.

In this case, for example, the cooling member may comprise plural rollers, and the glass substrate may be cooled by being conveyed on the plural rollers, and
wherein the conveyance of the glass substrate may be carried out in such a manner that each and every part of the first surface comes into contact with any of the plural rollers.

In the manufacturing method of the present invention, each of the plural rollers may have no level difference of 1 mm or more on its contacting surface with the glass substrate.

In the manufacturing method of the present invention, the cooling step (d) may further comprise a step of blowing a cooling air to the second surface of the glass substrate through the plural nozzles that are positioned in a side facing the second surface of the glass substrate.

In the manufacturing method of the present invention, the cooling step (d) may further comprise a step of blowing a cooling air to the first surface of the glass substrate through the plural nozzles that are positioned in a side facing the first surface of the glass substrate.

In the manufacturing method of the present invention, the composition-placing step (b) may comprise a step of screen-printing an ink containing the ceramic particles, with respect to the second surface of the glass substrate.

In the manufacturing method of the present invention, the ink may comprise a solid ceramic particles mixed and dispersed into an organic vehicle.

In this case, the solid ceramic particles may comprise an oxide of one metal selected from the group consisting of copper (Cu), chromium (Cr), iron (Fe), cobalt (Co), nickel (Ni) and manganese (Mn), or a composite oxide of these metals.

In the manufacturing method of the present invention, the ceramic layer-forming step (c) may comprise a step of heating the glass substrate having the composition placed thereon, in a range of 500°C to 650°C.

The manufacturing method of the present invention may further comprise:
(e) a step of installing a functional film on either or both of the first surface and the second surface of the glass substrate.

Furthermore, the present invention provides a manufacturing apparatus for manufacturing a front plate for a display comprising a glass substrate and a ceramic layer formed on at least a part of a marginal area of the glass substrate, the apparatus comprising:
a heating section for heating a glass substrate having a first surface and a second surface; and
a cooling section for cooling the heated glass substrate,
wherein the heating section heats a composition containing ceramic particles placed on at least a part of a marginal area of the second surface of the glass substrate to thereby form the ceramic layer,
the cooling section cools the glass substrate having the ceramic layer formed,
the cooling section comprises plural rollers arranged so as to face the first surface of the glass substrate on which plural rollers the glass substrate is conveyed and thereby cooled, and
wherein the cooling of the glass substrate is carried out in such a manner that the entire area of the first surface of the glass substrate undergoes substantially the same cooling history by bringing each and every part of the first surface into contact with any of the plural rollers in the cooling section.

In the manufacturing apparatus of the present invention, each of the plural rollers may have no level difference of 1 mm or more on its contacting surface with the glass substrate.

The manufacturing apparatus of the present invention may further comprise a second cooling means disposed in the second surface side of the glass substrate.

In the manufacturing apparatus of the present invention, the second cooling means may comprise plural nozzles capable of blowing a cooling air to the second surface of the glass substrate.

In the manufacturing apparatus of the present invention, the cooling section may further comprise plural nozzles capable of blowing a cooling air to the first surface of the glass substrate.

The present invention can provide a front plate for a display in which the occurrence of an output polarized light disturbance is significantly suppressed, a display device, and method and apparatus for manufacturing a front plate for a display.

FIG 1 is a view showing an example of a schematic cross section of a front plate according to the present invention;
FIG. 2 is a schematic rear view of the front plate shown in FIG. 1;
FIG 3 is a view showing a structure example of an evaluation apparatus;
FIG 4 is a flowchart schematically showing an example of a method for manufacturing the front plate according to the present invention;
FIG. 5A-1 and 5A-2 are views schematically showing an example of a cooling apparatus used for cooling glass substrate;

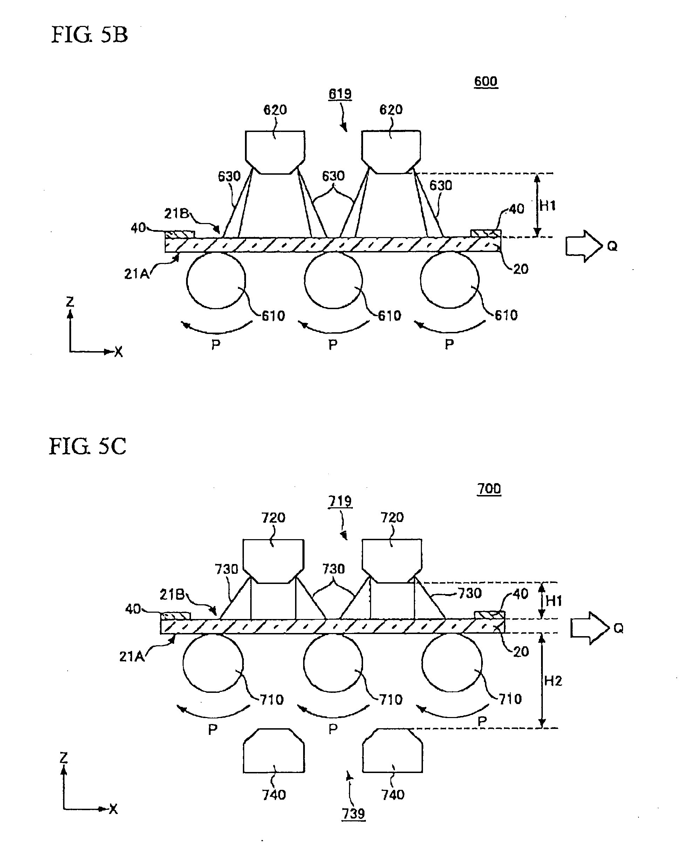

FIG. 5B is a view schematically showing another example of the cooling apparatus used for cooling glass substrate;
FIG. 5C is a view schematically showing yet another example of the cooling apparatus used for cooling glass substrate;

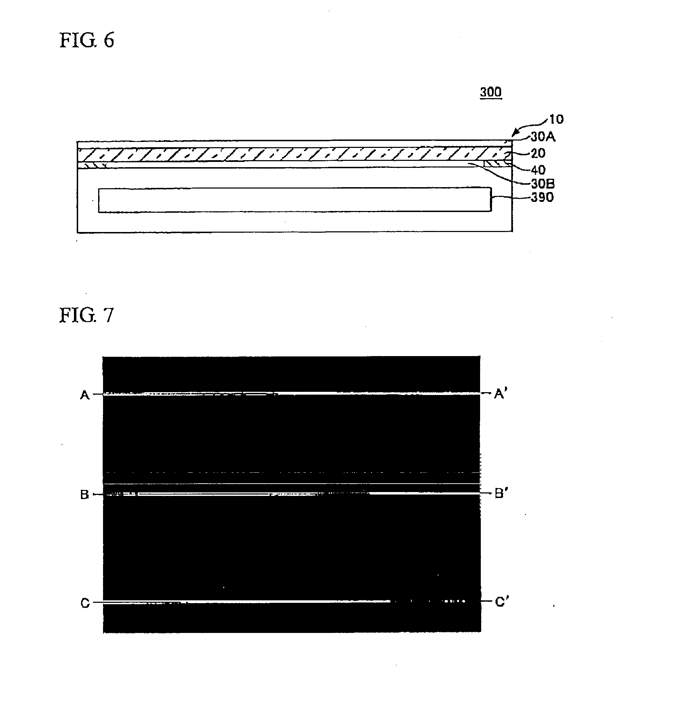

FIG 6 is a cross-sectional view schematically showing an example of a display device according to the present invention;
FIG. 7 is a photograph of an image within the surface of the front plate according to Example 1, which photograph was taken by using the evaluation apparatus 500;

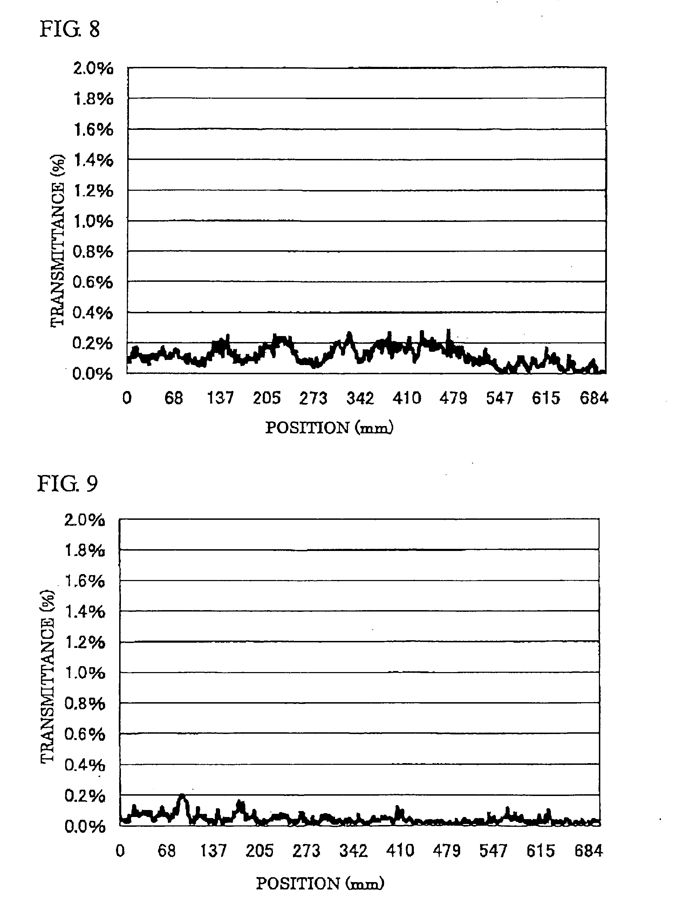

FIG. 8 is a graph showing transmittance changes obtained by scanning along the line A-A' of FIG 7;
FIG. 9 is a graph showing transmittance changes obtained by scanning along the line B-B' of FIG. 7;

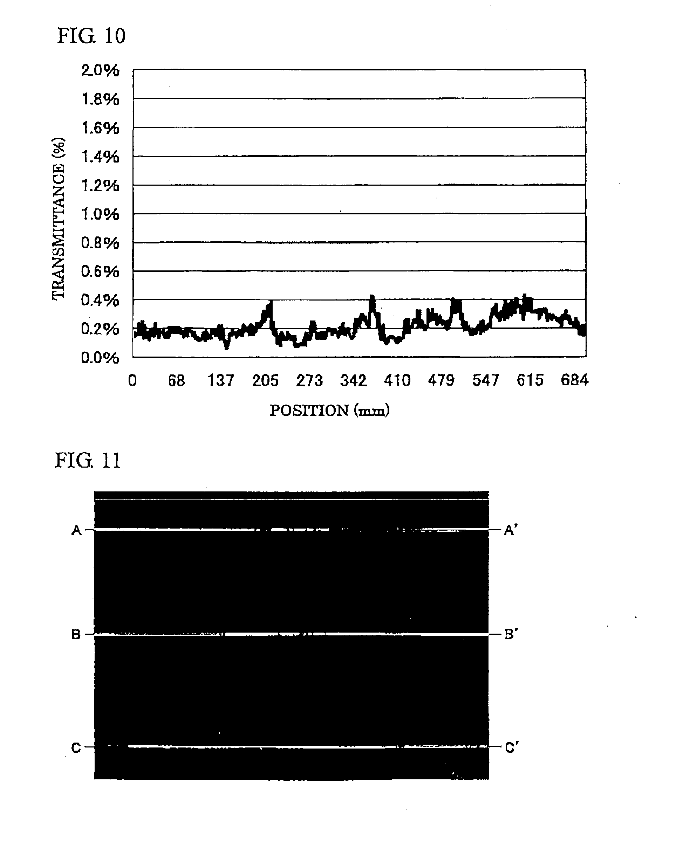

FIG 10 is a graph showing transmittance changes obtained by scanning along the line C-C' of FIG 7;
FIG. 11 is a photograph of an image within the surface of the front plate according to Comparative Example 1, which photograph was taken by using the evaluation apparatus 500;

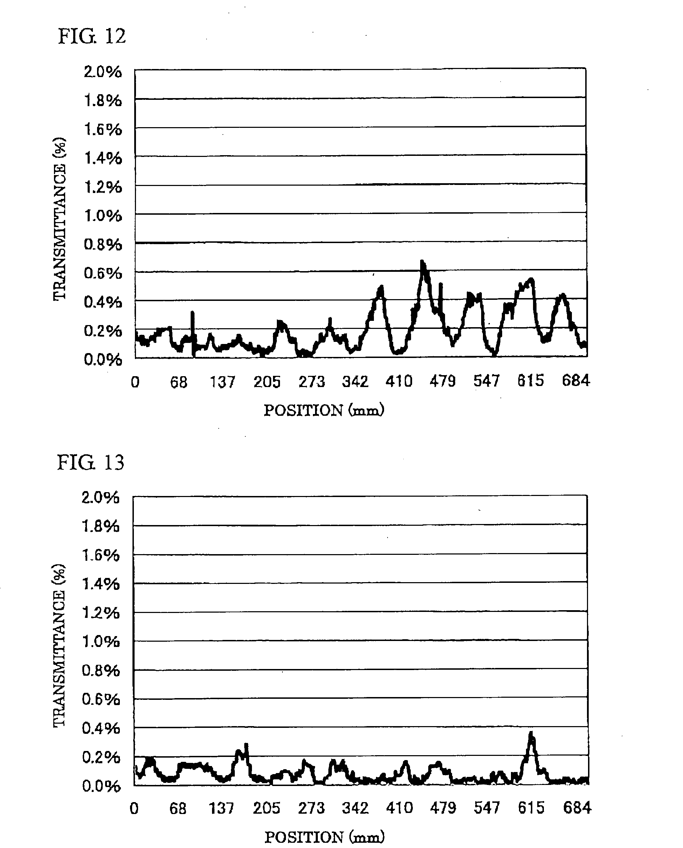

FIG. 12 is a graph showing transmittance changes obtained by scanning along the line A-A' of FIG. 11;
FIG. 13 is a graph showing transmittance changes obtained by scanning along the line B-B' of FIG. 11;

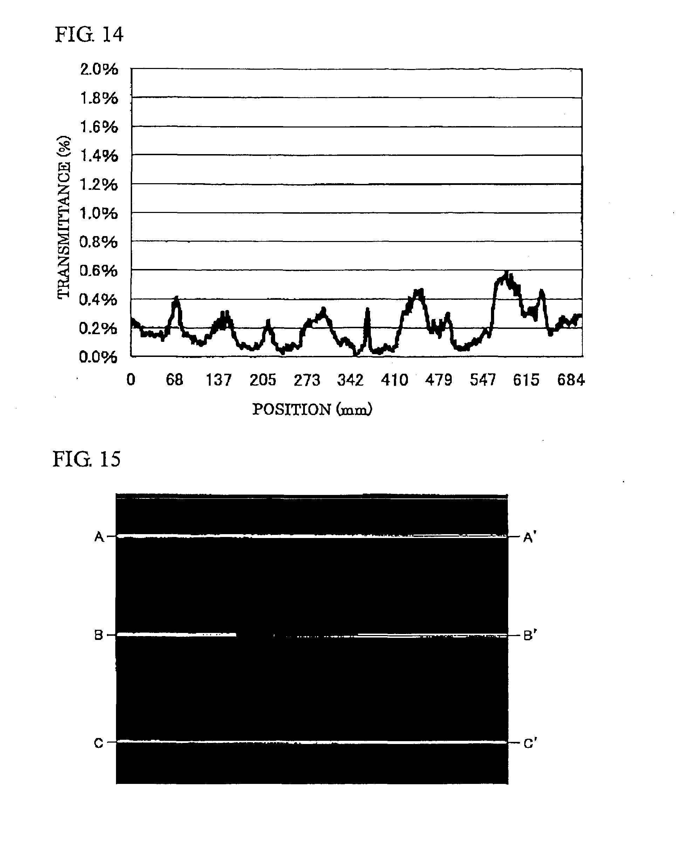

FIG. 14 is a graph showing transmittance changes obtained by scanning along the line C-C' of FIG. 11;
FIG. 15 is a photograph of an image within the surface of the front plate according to Example 2, which photograph was taken by using the evaluation apparatus 500;

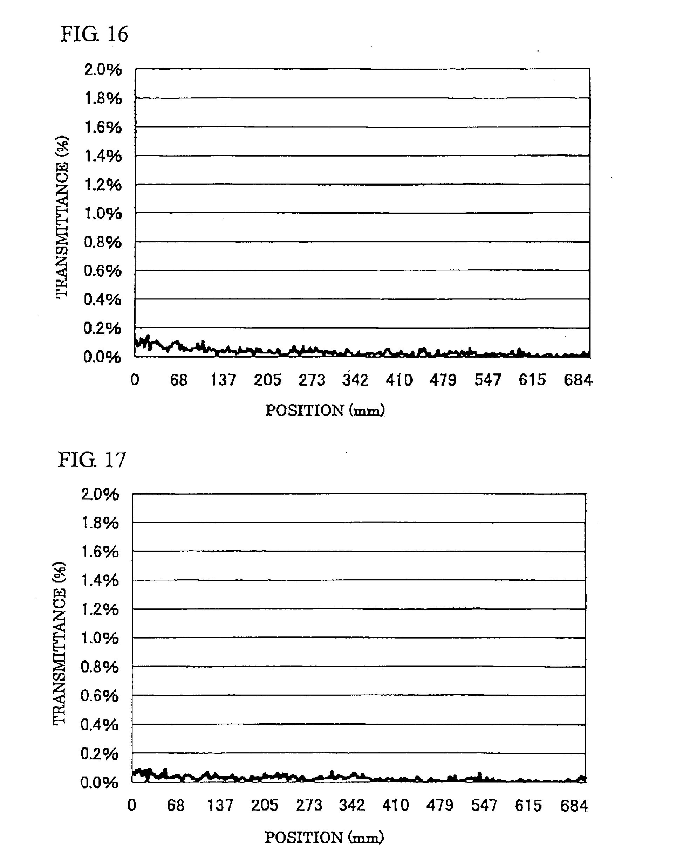

FIG. 16 is a graph showing transmittance changes obtained by scanning along the line A-A' of FIG. 15;
FIG. 17 is a graph showing transmittance changes obtained by scanning along the line B-B' of FIG. 15; and

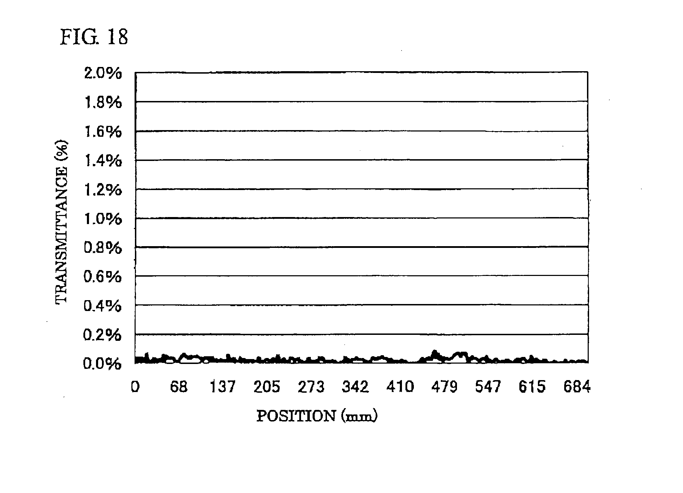

FIG. 18 is a graph showing transmittance changes obtained by scanning along the line C-C' of FIG. 15.

Hereinafter, an embodiment for carrying out the present invention will be described with reference to the drawings.

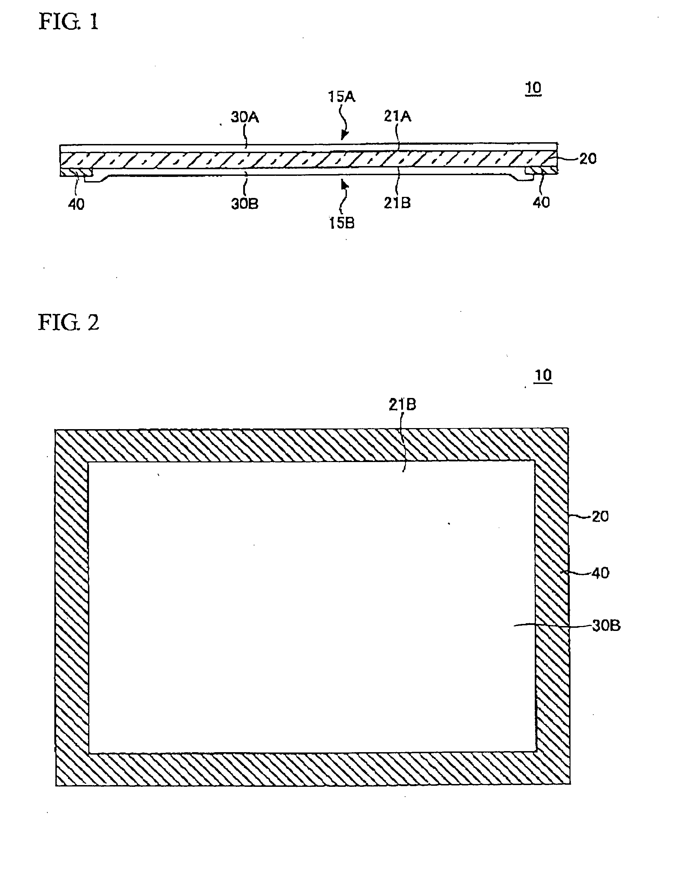

FIG. 1 shows an example of a schematic cross section of a front plate according to the present invention. FIG 2 shows a schematic rear view of the front plate shown in FIG. 1. In FIG. 2, the second functional film 30B described below is not shown for the sake of clarification.

As shown in FIG. 1, the front plate 10 according to the present invention is provided with a glass substrate 20 having a first surface 21A and a second surface 21B. On the first surface 21A of the glass substrate 20, a first functional film 30A is installed, and on the second surface 21B of the glass substrate 20, the second functional film 30B is installed. One or both of the first and second functional films 30A and 30B may be omitted.

The first and second functional films 30A and 30B are installed to impart functions such as impact failure prevention, ambient light reflection prevention, electromagnetic wave shielding, near infrared ray shielding, color compensation and/or abrasion resistance improvement.

In normal cases, in the front plate 10, the side where the first surface 21A of the glass substrate 20 is present is a front side 15A of the front plate 10, and the side where the second surface 21B of the glass substrate 20 is present is a rear side 15B of the front plate 10. The front side 15A of the front plate 10 is the side where light (image) exits from the front plate 10 (that is, the viewer's side), and the rear side 15B of the front plate 10 is the side where the display panel and the like are disposed (that is, the light source side).

Moreover, as shown in FIG. 2, on the second surface 21B of the glass substrate 20, a ceramic layer 40 is formed along the marginal area. In the example of FIG. 1, the ceramic layer 40 is formed so as to overlap the end portion of the second functional film 30B. However, the ceramic layer 40 may be formed so as not to overlap the peripheral area of the second functional film 30B.

The ceramic layer 40 is provided so as to enhance the design and decoration of the front plate 10 and further, various devices provided with the front plate 10. For example, in an FPD device having the front plate 10, in a case where a black ceramic layer is adopted as the ceramic layer 40, when the FPD device is off, no light exits at all from the front side 15A of the front plate 10 including the marginal area of the front plate 10. Consequently, the appearance of the FPD device gives the impression of being sharp, which enhances the beauty of the FPD device.

In normal cases, for the front plate of such a structure, since a ceramic layer is formed on the second surface 21B of the glass substrate 20, a heat treatment process is necessary in the manufacture. For example, for typical front plates, the ceramic layer is formed in such a manner that an ink containing ceramic is applied by printing to the marginal area of the glass substrate, and the ink is sintered by heating and then, cooled.

However, with such a front plate manufacturing method, there are cases where a stress strain distribution (non-uniformity) occurs within the surface of the front plate after manufacture. Moreover, such stress strain "non-uniformity" within the surface of the front plate may lead to a problem that the condition of the polarized light output from the display panel is disturbed at the time of transmission through the front plate, and this increases the possibility of the occurrence of the so-called "output polarized light disturbance".

In particular, it is expected that FPD devices having the so-called "3D (three-dimensional)" function will become widespread in the future. However, for the FPD devices having the 3D (three-dimensional) function, it is necessary for the images (lights) for the left eye and the right eye to be viewed by the left eye and the right eye, respectively, through a polarizing plate that transmits only desired polarized light. At this time, if an output polarized light disturbance occurs on the front plate, light of other than predetermined polarization enters the polarizing plate, or light of the predetermined polarization does not enter the polarizing plate, so that there is a possibility that an appropriate image cannot be viewed by the respective eye. That is, in the FPD devices having the 3D (three-dimensional) function, the influence of the presence of the stress strain "non-uniformity" within the surface of the front plate is more significant, so that even a slight output polarized light disturbance occurring on the front plate can degrade image quality or cause a conspicuous image disturbance.

On the contrary, according to the present invention, the front plate 10 where the stress strain non-uniformity within the surface is significantly suppressed is provided. Therefore, with the front plate 10 of the present invention, the occurrence of the output polarized light disturbance on the front plate can be significantly suppressed. Moreover, thereby, even when the front plate 10 is applied to the FPD devices for 3D (three-dimensional) susceptible to the output polarized light disturbance, the occurrence of the degradation of image quality and the occurrence of a conspicuous image disturbance can be significantly suppressed.

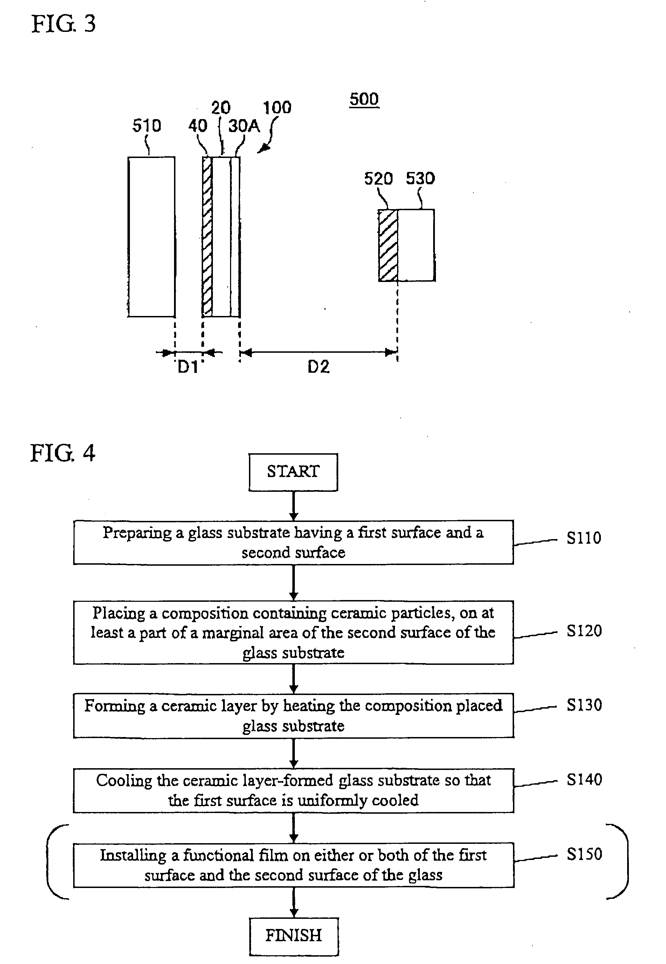

In the present invention, the degree of the stress strain non-uniformity within the surface of the front plate can be evaluated by using an evaluation apparatus as shown in FIG. 3. Hereinafter, such an evaluation method will be described.

As shown in FIG. 3, the evaluation apparatus 500 includes a liquid crystal panel 510, a polarizing plate 520 and a brightness measurement device 530 equipped with a CCD camera.

A front plate 100 to be evaluated is disposed between the liquid crystal panel 510 and the polarizing plate 520. The distance D 1 between the liquid crystal panel 510 and the front plate 100 is 50 mm, and the distance D2 between the front plate 100 and the brightness measurement device 530 is 1 m.

The position of the polarizing plate 520 is not specifically limited so long as it is disposed between the front plate 100 and the brightness measurement device 530. For example, in the example of FIG. 3, the polarizing plate 520 is disposed immediately in front of the brightness measurement device 530.

The liquid crystal panel 510 is set in a condition that the entire surface of the liquid crystal panel 510 is in white light emitting state by the light emitted from the liquid crystal panel 510 itself. The emitted white light of the liquid crystal panel 510 is emitted from the liquid crystal panel 510 in a polarized state. Moreover, when the front plate 100 is absent the orientation of the polarizing plate 520 is set in a condition that the light emitted from the liquid crystal panel 510 is not transmitted up to the brightness measurement device 530, that is, in a crossed Nicol condition. Therefore, when the front plate 100 is absent, the image emitted from the liquid crystal panel 510 and passed through a polarizing plate 520 is recognized as being black on the entire surface by the brightness measurement device 530.

In such an evaluation apparatus, the amount (cd/m²) of transmitted light emitted from the liquid crystal panel 510 and transmitted through the front plate 100 and the polarizing plate 520 is measured by the brightness measurement device 530. Alternatively, the light reaching the brightness measurement device 530 is photographed by the camera. Here, the transmitted light transmitted through the front plate 100 and the polarizing plate 520 is a light transmitted through the area other than the ceramic layer on the front plate 100 and the polarizing plate 520.

In this case, by watching the photograph taken by the camera in visual inspection, the degree of the stress strain non-uniformity within the surface of the front plate 100 can be easily estimated. That is, when an outstandingly bright part is recognized on the photograph, it is confirmed that large stress strain non-uniformity is present within the surface of the front plate 100, and when the photograph is black, it is estimated that the stress strain non-uniformity within the surface is significantly suppressed on the front plate 100.

In order to avoid a subjective estimation based on a photograph, the amount (cd/m²) of transmitted light measured by the brightness measurement device 530 may be converted into a numerical value to estimate the degree of the stress strain non-uniformity within the surface of the front plate 100.

That is, according to the findings of the inventors of the present application, when the light amount under the crossed Nicol condition and the light amount under a parallel Nicol condition in a case where the front plate 100 in FIG. 3 is absent are taken as 0% and 100%, respectively, it can be concluded that the stress strain non-uniformity within the surface of the front plate 100 can be significantly suppressed if the difference (ΔT) between the maximum value Tₘₐₓ and the minimum value Tₘᵢₙ of the amount of transmitted light reaching the within-surface brightness measurement device 530 is 0.4% or less. The ΔT is more preferably 0.2% or less.

In particular, it can be considered that when the maximum value Tₘₐₓ of the amount of transmitted light is 0.5% or less, the stress strain within the surface can be suppressed to an extremely low level over the entire surface. The Tₘₐₓ is more preferably 0.2% or less.

By using the evaluation apparatus 500 shown in FIG. 3 as described above, the degree of the stress strain non-uniformity within the surface of the front plate can be easily evaluated.

### (Regarding the structural members of the front plate)

Next, the members included in the front plate 10 according to the present invention will be described in more detail.

### (Glass substrate 20)

Although the material and the like of the glass substrate 20 are not specifically limited, a material having high transmittance and being barely colored is desirable. As for the glass substrate 20, normally, a glass substrate is used that is 2.5 mm in thickness, 90.2% in visible light transmittance Tv, 8.2% in visible light reflectance Rv, 0.06% in haze (turbidity), and x=0.307 and y=0.314 in the chromaticity values on the x-y chromaticity coordinates.

For example, the glass substrate 20 may be a soda-lime glass substrate.

The outer circumference of the glass substrate 20 is cut into a predetermined shape, and in normal cases, the outer edge is chamfered. Although the thickness of the glass substrate 20 is not specifically limited, it may be, for example, in a range of 0.3 mm to 5 mm. The thickness of the glass substrate 20 is more desirably 0.3 mm to 3.5 mm, and is still more desirably 1 mm to 3 mm.

### (Functional films 30A and 30B)

The first and second functional films 30A and 30B may be installed as required. As mentioned above, the functional films 30A and 30B are installed to impart functions such as impact failure prevention, reflection prevention of ambient light or light from the display panel, electromagnetic wave shielding, near infrared ray shielding, color compensation and/or abrasion resistance improvement.

The functional films 30A and 30B are formed, for example, by pasting a resin film to each of the first surface 21 A and the second surface 21 B of the glass substrate 20. Alternatively, the functional films 30A and 30B may be formed by applying a thin film forming method such as an evaporation method, a sputtering method or a CVD method.

The constitutional materials of the functional films 30A and 30B are not specifically limited so long as a desired function is delivered. The thickness and shape thereof are selected as appropriate according to the intended use. The functional films 30A and 30B each may be a single layer or comprise a multiple functional films.

### (Ceramic layer 40)

As mentioned above, on the second surface 21B of the glass substrate 20, the ceramic layer 40 is formed along the marginal area so as to enhance the design and decoration of the front plate 10. In the example of FIG. 2, the ceramic layer 40 is formed along the entire marginal area of the second surface 21B of the glass substrate 20. However, it is necessary only that the ceramic layer 40 be formed along at least a part of the marginal area of the second surface 21B of the glass substrate 20.

Although the thickness of the ceramic layer 40 is not specifically limited, in normal cases, it is usually adjusted to a thickness equal to the thickness of the second functional film 30B. Thereby, when the ceramic layer 40 and the second functional film 30B do not overlap each other, the difference in level on the surface can be reduced on the rear side 15B of the front plate 10.

The thickness of the ceramic layer 40 may be, for example, in a range of 5 µm to 25 µm.

Although the material of the ceramic layer 40 is not specifically limited, in normal cases, the ceramic layer 40 is formed of ceramic particles. The ceramic particles are formed of a glass composition and a heat-resistant pigment. The ceramic layer 40, that is, the ceramic particles may further contain a refractory filler when necessary.

The ceramic layer 40 is formed, for example, by screen-printing an ink to a marginal area of the second surface 21B of the glass substrate 20. The ink is, for example, prepared by mixing and dispersing, into an organic vehicle, solid ceramic particles containing a glass composition, a heat-resistant pigment and a refractory filler. Then, the ink is heat-treated to bake the ceramic layer 40 onto the glass substrate 20.

### (Method for manufacturing the front plate according to the present invention)

Next, an example of the method for manufacturing the front plate 10 according to the present invention having the above-described structure will be described with reference to FIG. 4. FIG. 4 shows an example of a flow in manufacturing the front plate 10 according to the present invention.

As shown in FIG. 4, the method for manufacturing the front plate according to the present invention includes:
a step of preparing a glass substrate having a first surface and a second surface (step S 110);
a step of placing a composition containing ceramic particles, on at least a part of the marginal area of the second surface of the glass substrate (step S120);
a step of forming a ceramic layer by heating the composition-placed glass substrate (step S130); and
a step of cooling the ceramic layer-formed glass substrate so that the first surface is uniformly cooled (step S 140).

The method for manufacturing the front plate according to the present invention may optionally include a step of installing a functional film on either or both of the first surface and the second surface of the glass substrate (step S 150) in addition to (step S110) to (step S140).
Hereinafter, each step will be described.

### (Step S 110)

First, the glass substrate 20 having the first surface 21A and the second surface 21B facing each other is prepared. As mentioned above, the composition of the glass substrate 20 is not specifically limited, and the glass substrate 20 may be, for example, a soda-lime glass substrate. As mentioned above, the edge of the glass substrate 20 may be chamfered.

### (Step S120)

Then, a composition containing ceramic particles, which forms the ceramic layer 40 later, is prepared. Although the form of this composition is not specifically limited, it may be, for example, an ink form.

Such an ink may be prepared, as mentioned above, for example, by mixing and dispersing, into an organic vehicle, solid ceramic particles containing a glass composition, a heat-resistant pigment and a refractory filler. Moreover, the solid component may contain an additive other than the glass composition, the heat-resistant pigment and the refractory filler if necessary.

Hereinafter, the ingredients contained in the ink will be described.

### (Glass composition)

The glass composition may contain, for example, in mole percent, 18 to 55% of SiO₂ 1 to 30% of ZnO, 1 to 30% of B₂O₃, 0 to 10% of Bi₂O₃, 8 to 25% of at least one member selected from Li₂O, Na₂O and K₂O, 0 to 10% of CuO, 0 to 8% of Al₂O₃, 0 to 3% of at least one member selected from ZrO₂, SnO₂ and CeO₂, 1% or less (including 0%) of Fe₂O₃, and less than 0.5% (including 0%) ofTiO₂.

In normal cases, the glass composition is provided in powder form. It is desirable that the powder have a particle size distribution and an average particle diameter where coarse particles having diameters of more than 10 µm are removed by sieving or the like.

### (Heat-resistant pigment)

For example, when the ceramic layer 40 is colored in black, it is desirable that the heat-resistant pigment contain an oxide of at least one kind of metal selected from the group consisting of copper (Cu), chromium (Cr), iron (Fe), cobalt (Co), nickel (Ni) and manganese (Mn), or a composite oxide powder of these metals.

Concrete examples of the black pigment include a Cu-Cr-Mn pigment (#3700) and a Cu-Fe-Mn pigment (#3300) manufactured by Asahi Kasei Kogyo Co., Ltd. and a Cu-Cr pigment (42-302A), an Fe-Mn pigment (42-313A) and Mn-Co-Cu-Al pigment (42-712A) manufactured by Tokan Material Technology Co., Ltd.

The mass average particle diameter D50 of the heat-resistant pigment powder may be in a range of 0.5 to 5.0 µm. When the average particle diameter D50 of the heat-resistant pigment powder is less than 0.5 µm, the dispersibility into the ink is reduced, so that the possibility of occurrence of coloring non-uniformity or the like in the ceramic layer 40 becomes high. On the other hand, when the average particle diameter D50 of the heat-resistant pigment powder is larger than 5.0 µm, colorability is apt to decrease.

It is desirable that the content of the glass composition be in a range of 40 to 80% by mass and the content of the heat-resistant pigment be in a range of 20 to 40% by mass. When the content of the glass composition is less than 40% by mass, the bakeability of the ink is reduced. When the content of the glass composition is more than 80% by mass, the amounts of other ingredients are relatively small, so that there is a possibility that the intensity of the ceramic layer 40 is reduced. On the other hand, when the content of the heat-resistant pigment is less than 20% by mass, there is a possibility that the ceramic layer 40 cannot be provided with sufficiently absorbance and light shielding capability. Conversely, when the content of the heat-resistant pigment is more than 40% by mass, there is a possibility that the bakeability of the ink is reduced.

### (Refractory filler)

The refractory filler is added for the purpose of adjusting the sinterability at the time of ink baking, matching the thermal expansion coefficient of the ceramic layer 40 with respect to that of the glass substrate 20, suppressing the reduction in the intensity of the front plate 10, or the like.

The refractory filler may be a filler of an oxide including alumina, quartz glass, β-quartz crystals typified by β-eucryptite and β-spodumene, mullite, aluminum borate, aluminum titanate, potassium titanate, zirconium phosphate, zircon, cordierite, forsterite, steatite, magnesium oxide or zinc oxide. In addition to these oxides, the following may be used: a metal such as silicon; a boride such as titanium boride; a nitride such as silicon nitride; a carbide such as silicon carbide; and a silicide such as titanium silicide.

In the solid ceramic particles for the ink, it is desirable that the content of the refractory filler be 30% by mass or less. When the content of the refractory filler is more than 30% by mass, there is a possibility that the sinterability at the time of baking is reduced. In particular, it is desirable that the content of the refractory filler be 8% by mass or less although it depends on the intensity of the glass substrate 20, the thermal expansion coefficients of the glass substrate 20 and the glass composition and the like. It is desirable that the content of the refractory filler be 1% by mass or more.

### (Organic vehicle)

In normal cases, the organic vehicle is prepared by dissolving a resin into a solvent. As the resin forming the vehicle, for example, the following are used: cellulose ethers such as methyl cellulose, ethyl cellulose and carboxymethyl cellulose; polyvinyl acetals such as polyvinyl butyral; and polyalkyl (meth)acrylates such as polymethyl (meth)acrylate and polyethyl (meth)acrylate.

The kind of the solvent is not specifically limited. The solvent may be any kind so long as it is capable of dissolving the resin, has proper workability at the time of applying the ink and can be dried in the post-processing after the application.

Concrete examples of the solvent used for the organic vehicle include: alcohols such as terpineol and 2,2,4-trimethyl-1,3-pentanediol monoisobutyrate; ethylene glycols such as diethylene glycol monobutyl ether and diethylene glycol monobutyl ether acetate; propylene glycols such as propylene glycol butyl ether and propylene glycol acetate; ester citrates such as tributyl citrate and acetyl tributyl citrate; sebacates such as dibutyl sebacate; adipate esters such as dioctyl adipate; and phthalate esters such as dimethyl phthalate, diethyl phthalate and dibutyl phthalate.

The ink may further contain another additive as required. The ink may contain, for example, an additive that adsorbs to the solid ceramic particles to modify the surface and adjusts the viscosity characteristic of the ink, or another known additive. Examples of the additive for viscosity adjustment include a surfactant having a structure such as compounds containing a hydroxyl group, compounds containing an amine group, compounds containing an acid group such as phosphoric acid, carboxylic acid or sulfone acid, esters thereof, and neutralized salts.

Then, the ink containing the above-described ingredients is provided on the marginal area of one surface (here, the second surface 21B) of the glass substrate 20. The ink providing method is not specifically limited. For example, the ink may be applied to the second surface of the glass substrate by employing a printing method such as screen-printing or gravure-printing, or an application method using a dispenser or the like.

When screen-printing is employed, screen-printing using a 180- to 250-mesh polyester screen, or preferably using a 225- to 250-mesh polyester screen is typically performed.

Thereafter, in order to dry the solvent component in the ink, the glass substrate may be kept, for example, at a temperature of 80 to 240°C for approximately three to fifteen minutes, or preferably at a temperature of 80 to 140°C for approximately five to fifteen minutes.

### (Step S130)

Then, the glass substrate 20 where the composition containing ceramic (for example, the above-mentioned ink) is placed is subjected to calcination treatment, whereby a ceramic layer is formed on the second surface 21B of the glass substrate 20.

The temperature for the calcination treatment may be, for example, in a range of 500 to 650°C although it varies depending on the composition of the ceramic particles contained in the composition (in the case of an ink, the composition of the solid component of the ceramic particles contained in the ink).
It is desirable that the temperature for the calcination treatment be as low as possible in the above-mentioned range and the treatment time be long. By performing the calcination treatment under the conditions mentioned above, the distribution of the calcination temperature within the surface of the glass substrate 20 can be reduced. In this case, the treatment time is desirably 200 to 500 seconds, and is more desirably 250 to 400 seconds.

By the above-described process, the ceramic layer 40 is formed in the marginal area of the second surface 21 B of the glass substrate 20.

### (Step S 140)

After the calcination treatment, the glass substrate 20 is cooled. Although the cooling method is not specifically limited, in the present invention, it is necessary that the glass substrate 20 be cooled in such a manner that the first surface 21A is substantially uniformly cooled. Thereby, the occurrence of the stress strain non-uniformity within the surface can be significantly suppressed on the glass substrate 20. Moreover, thereby, the occurrence of the output polarized light disturbance can be significantly suppressed on the completed front plate 10.

The method for uniformly cooling the first surface 21 A of the front plate 10 is not specifically limited. For example, the glass substrate may be cooled in such a manner that a cooling plate larger in size than the glass substrate is kept at a temperature lower than that of the glass substrate just after the calcination treatment, and the glass plate after the calcination treatment is placed on the cooling plate and cooled. In this case, since the entire area of the first surface of the glass substrate is in contact with the cooling plate in the cooling process, the first surface of the glass substrate can be uniformly cooled.

Alternatively, as shown in FIGs. 5A-1 and 5A-2, the glass substrate just after the calcination treatment may be conveyed on rollers as the cooling member to cool the glass substrate. FIGs. 5A-1 and 5A-2 show an example of a cooling apparatus used when the first surface of the glass substrate is uniformly cooled.

As shown in FIGs. 5A-1 and 5A-2, the cooling apparatus 200 is equipped with plural rollers 210 as the cooling member disposed parallel to one another. In the example of FIGs. 5A-1 and 5A-2, the rollers 210 as the cooling member are placed at equal intervals in the X direction, and each roller 210 is placed so as to extend parallel to the Y direction. The rollers 210 are kept at a temperature lower than that of the glass substrate 20 just after the calcination treatment, for example, by being subjected to an uncontrolled atmosphere and by not positively performing heating or cooling. Moreover, the surfaces of the rollers 210 contacting with the glass substrate are comparatively smooth, and on the surfaces, for example, a level difference of as large as 1 mm or more is not present

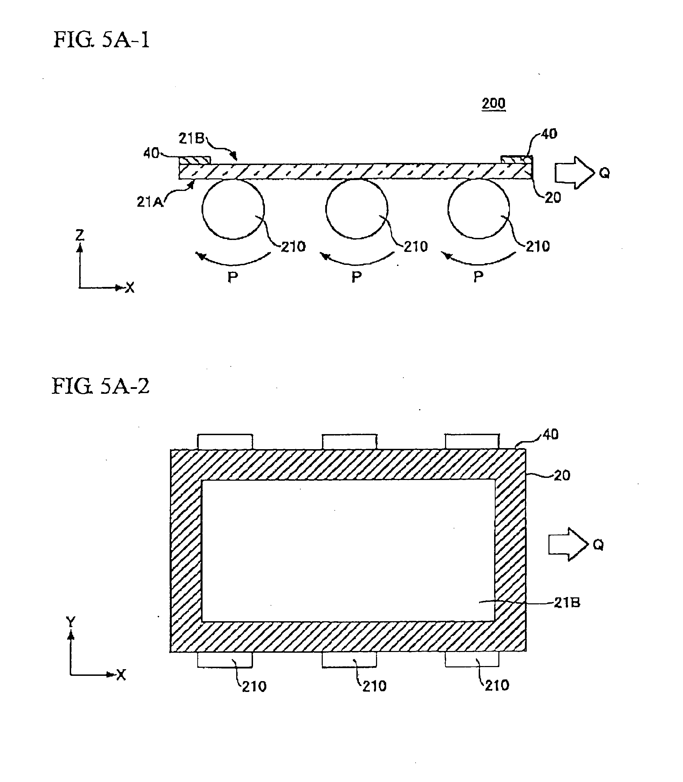

The rollers 210 rotate in the direction shown by the arrow P of FIG 5A-1. Consequently, when the glass substrate 20 just after the calcination treatment where the ceramic layer 40 is baked is placed on one of rollers 210, the glass substrate 20 is conveyed in a direction vertical to the extension direction of the rollers 210, that is, the direction shown by the arrow Q of FIGs. 5A-1 and 5A-2.

In such a cooling apparatus 200, when the rotation rate of the rollers 210, in other words, the conveyance speed of the glass substrate 20 is higher than a given speed, the entire area of the first surface 21A of the glass substrate 20 undergoes a substantially similar cooling history. The rotation rate of the rollers 210 is desirably a rate that gives a conveyance speed of the glass substrate 20 falling within the range of 0.05 m/sec to 1 m/sec, more desirably a rate that gives a conveyance speed falling within the range of 0.1 m/sec to 0.5 m/sec. When the conveyance speed falls within the above range, the entire area of the first surface 21A of the glass substrate 20 can undergo substantially the same cooling history. The diameter of the rollers 210 is desirably 20 mm to 60 mm, and more desirably 30 mm to 50 mm. The interval between the adjoining rollers 210 is desirably 5 cm to 30 cm, and more desirably 10 cm to 20 cm. When the interval falls within the above range, the entire area of the first surface 21 A of the glass substrate 20 can undergo substantially the same cooling history. In particular, as mentioned above, no large level difference is present on the surfaces of the rollers 210. For this reason, a part which does not contact with the rollers 210 is not present in the first surface 21A of the glass substrate 20, and the entire part of the first surface 21 A surely comes into contact with the rollers 210. Consequently, contact non-uniformity, that is, cooling non-uniformity is not readily caused.

Therefore, the first surface 21A of the glass substrate 20 can be substantially uniformly cooled also by the cooling method using the cooling apparatus 200.

In the example of FIGs. 5A-1 and 5A-2, the glass substrate 20 is conveyed in one direction (the direction shown by the arrow Q) by the rotation of the rollers 210. However, for example, the glass substrate 20 may be conveyed alternately in the rightward and leftward directions of FIGs. 5A-1 and 5A-2 by periodically reversing the rotation direction P of each of the rollers 210. In this case, the space necessary for cooling the glass substrate 20 is significantly reduced, so that the overall size of the cooling apparatus 200 can be reduced.

FIG 5B shows another example of the cooling apparatus used when the glass substrate is uniformly cooled.

As shown in FIG. 5B, this cooling apparatus 600 has a similar structure to the above-described cooling apparatus 200. Therefore, in FIG 5B, similar members to those of FIGs. 5A-1 and 5A-2 are denoted by reference numerals that are the reference numeral members of FIGs. 5A-1 and 5A-2 to which 400 are added.

However, the cooling apparatus 600 is different from the above-described cooling apparatus 200 in that second cooling means 619 is disposed on a side (that is, the side of the second surface 21B) opposite to the side (that is, the side of the first surface 21A) of the glass substrate 20 contacting with rollers 610. In the example of FIG 5B, the second cooling means 619 includes plural nozzles 620 arranged along the X direction of FIG. 5B (that is, the movement direction (Q) of the glass substrate 20). Although not apparent from the figure, the nozzles 620 each extends in a direction vertical to the arrow Q (Y direction).

The nozzles 620 are capable of blowing a cooling air 630 to the second surface 21B of the glass substrate 20. Here, the glass substrate 20 moves in the direction of the arrow Q of the figure while being subjected to the cooling air 630 from the nozzles 620. Therefore, even though the nozzles 620 are fixed, the glass substrate 20 can undergo a uniform cooling history by the cooling air 630. Consequently, in the cooling apparatus 600, the entire area of the glass substrate 20 can be more efficiently cooled. The pressure of the cooling air 630 is desirably 0.5 MPa to 2 MPa, and more desirably 0.8 MPa to 1.5 MPa. When the pressure of the cooling air 630 falls within the above range, the glass substrate 20 can be sufficiently cooling without causing cracks. It is desirable that the temperature of the cooling air 630 be the ambient temperature.

It is desirable that the nozzles 620 be arranged in the X direction with regular pitch. The pitch of arrangement of the nozzles 620 is, for example, in a range of 30 mm to 100 mm.

Moreover, it is desirable that the distance between the nozzles 620 and the glass substrate 20 be set so that the cooling airs 630 blown from adjoining nozzles do not interfere with each other. Specifically, when the nozzles 620 are arranged with the above-mentioned pitch in the x direction, the distance H1 between the nozzles 620 and the second surface 21B of the glass substrate 20 is desirably 10 to 60 mm, and more desirably 15 to 45 mm. This is because by setting the distance H1 to 10 mm or more, the risk of the nozzles 620 and the glass substrate 20 coming into contact with each other to cause scratches on the glass substrate 20 can be more avoided. When the distance H1 is 60 mm or less, the interference between the cooling airs 630 blown from the adjoining nozzles 620 does not readily occur.

When the interference between the cooling airs 630 blown from the adjoining nozzles 620 occurs, the cooling airs 630 become turbulent, which may cause small regular (or irregular) linear distortions on the second surface 21B of the glass substrate 20.

However, it has been confirmed by the inventors of the present application that even if such distortions are caused on the glass substrate 20, the influence of the distortions on the amount of light transmitted through the glass substrate is reduced by bringing the nozzles near the glass, and any output polarized light disturbance is hardly observed.

FIG. 5C shows a still another example of the cooling apparatus used when the glass substrate is uniformly cooled.

As shown in FIG. 5C, this cooling apparatus 700 has a similar structure to the above-described cooling apparatus 600. Therefore, in FIG 5B, similar members to those of FIG. 5B are denoted by reference numerals that are the reference numeral members of FIG. 5B to which 100 is added.

However, the cooling apparatus 700 is different from the cooling apparatus 600 shown in FIG. 5B in that cooling means 739 (third cooling means 739) is disposed on the first surface 21A side of the glass substrate 20 in addition to the second surface 21B side of the glass substrate 20.

Like the second cooling means 719, the third cooling means 739 includes plural nozzles 740 arranged along the movement direction of the glass substrate 20 (the direction shown by the arrow Q). Moreover, the nozzles 740 each is capable of blowing a cooling air to the first surface 21A of the glass substrate 20.

Therefore, it is apparent that in the cooling apparatus 700 having such a structure, the glass substrate 20 can be uniformly and quickly cooled as in the cooling apparatus 600 shown in FIG. 5B.

In the cooling apparatus 700, the distance between the nozzles 740 and the glass substrate 20 may also be set so that the cooling airs blown from adjoining nozzles do not interfere with each other. However, in the case of the cooling apparatus 700, the effect of cooling the first surface 21A of the glass substrate 20 is mostly brought by the rollers 710. Therefore, in the cooling apparatus 700, the restriction on the distance H2 between the nozzles 740 and the first surface 21A of the glass substrate 20 is smaller than that on the distance H1 between the nozzles 720 and the second surface 21B of the glass substrate 20. Therefore, for example, the nozzles 740 may be placed in arbitrary positions so as not to interfere with the rollers 710.

In the examples of FIGs. 5B and 5C, the second cooling means 619 and 719 and the third cooling means 739 all include plural nozzles 620, 720 and 740. However, this is merely an example, and the second cooling means 619 and 719 and the third cooling means 739 may have a different structure.

By the above-described process, the ceramic layer 40 is formed in the marginal area of the second surface of the glass substrate. Since the glass substrate undergoes a uniform cooling history within the surface as described above, the stress strain non-uniformity within the surface of the glass substrate is significantly suppressed.

### (Step S150)

Then, a functional film may be installed on either or both of the first surface 21A and the second surface 21B of the glass substrate 20. The functional film may be a resin film such as a PET film. When a functional film is installed on the second surface 21B of the glass substrate 20, it is desirable that the functional film be placed so as to overlap a part of the ceramic layer. This prevents a gap from being formed between the end surface of the ceramic layer 40 and the end surface of the resin film on the second surface 21B of the glass substrate.

In the manufacturing method of the present invention, (step S150) is not essential step but is performed as required.

By the above-described process, the front plate 10 according to the present invention, for example, as shown in FIG. 1 can be manufactured.

### (Manufacturing Apparatus)

A manufacturing apparatus of the present invention is an apparatus for manufacturing a front plate for a display comprising a glass substrate and a ceramic layer formed on at least a part of a marginal area of the glass substrate.
The apparatus has a heating section for heating a glass substrate having a first surface and a second surface and a cooling section for cooling the heated glass substrate. The heating section heats a composition containing ceramic particles placed on at least a part of a marginal area of the second surface of the glass substrate to thereby form the ceramic layer. The cooling section cools the ceramic layer-formed glass substrate. The cooling section comprises plural rollers arranged so as to face the first surface of the glass substrate on which plural rollers the glass substrate is conveyed and thereby cooled. The cooling of the glass substrate is carried out in such a manner that the entire area of the first surface of the glass substrate undergoes substantially the same cooling history by bringing each and every part of the first surface into contact with any of the plural rollers in the cooling section.

Each of the plural rollers may have no level difference of 1 mm or more on its contacting surface with the glass substrate.

The manufacturing apparatus of the present invention desirably comprise a second cooling means disposed in the second surface side of the glass substrate. And the second cooling means desirably comprise plural nozzles capable of blowing a cooling air to the second surface of the glass substrate. Further, the cooling section desirably comprises plural nozzles capable of blowing a cooling air to the first surface of the glass substrate.

### (Display device)

The front plate 10 according to the present invention having the above-described features is applicable to display devices such as various FPD devices, for example, liquid crystal displays (LCDs), plasma displays (PDPs) and organic electroluminescent displays (OELDs).

FIG. 6 schematically shows an example of the structure of such a display device.

As shown in FIG. 6, the display device 300 has the front plate 10 according to the present invention, and further has a display panel 390 disposed adjoining or directly in contact with the front plate 10.

The display panel 390 may be, for example, for LCDs, PDPs and OELDs. The constitution of the display panel 390 is not specifically limited, and a display panel of a conventional structure may be widely provided. The display panel 390 is disposed so that the front side (the viewer's side) of the display panel 390 faces the second surface 21B side of the front plate 10 (that is, the rear side 15B of the front plate 10).

In the display device 300 structured as described above, since the stress strain non-uniformity within the surface of the front plate 10 is suppressed, the output polarized light disturbance attributed to the front plate 10 is significantly suppressed. Moreover, for this reason, the polarized light emitted from the display panel 390 is emitted from the display device 300 in a substantially "unchanged" polarization state without being adversely affected by the front plate 10. Consequently, in the display device 300, degradation of image quality and the occurrence of a conspicuous image disturbance can be significantly suppressed.

In particular, when the display device 300 has the 3D (three-dimensional) function, the polarized images for the respective eye reaches the viewer's respective eye in the substantially "unchanged" polarization state, so that an extremely sharp and high-quality image can be obtained.

### Examples

Hereinafter, Examples of the present invention will be described.

### (Example 1)

A front plate where a ceramic layer was formed on the marginal area of one surface of a glass substrate was actually manufactured by the following method, and the degree of the stress strain non-uniformity of this front plate was evaluated.

### (Manufacturing of the Front Plate)

The manufactured front plate had a constitution where an antireflection film was provided on the entire area of the first surface of the glass substrate and the ceramic layer was formed along the entire marginal area of the second surface of the glass substrate. No antireflection film was provided on the second surface of the glass substrate.

The front plate was manufactured by the following method:

First, a transparent soda-lime glass plate was prepared. This transparent soda-lime glass plate had the following characteristics: 2.5 mm in thickness, 90.2% in visible light transmittance Tv, 8.2% in visible light reflectance Rv, 0.06% in haze (turbidity), and x=0.307 and y=0.314 on the x-y chromaticity coordinates.

This glass was cut out and then, chamfered, thereby obtaining a glass substrate. The dimensions of the glass substrate were 765 mm long by 1206 mm wide by 2.5 mm thick.

Then, the ink was screen-printed to the second surface of the glass substrate.

The ink was prepared by the following method:

### (Preparation of the Glass Composition)

First, the material mixture was prepared by blending and mixing the material powders so that the glass composition (in mole percent) was adjusted as shown in Table 1. As to the material powders, for the material that was available in its oxide form such as SiO₂, an oxide was used, and for the alkaline ingredient such as Li₂O, its carbohydrate was used. The mixing of the material powders was performed by using a V mixer.

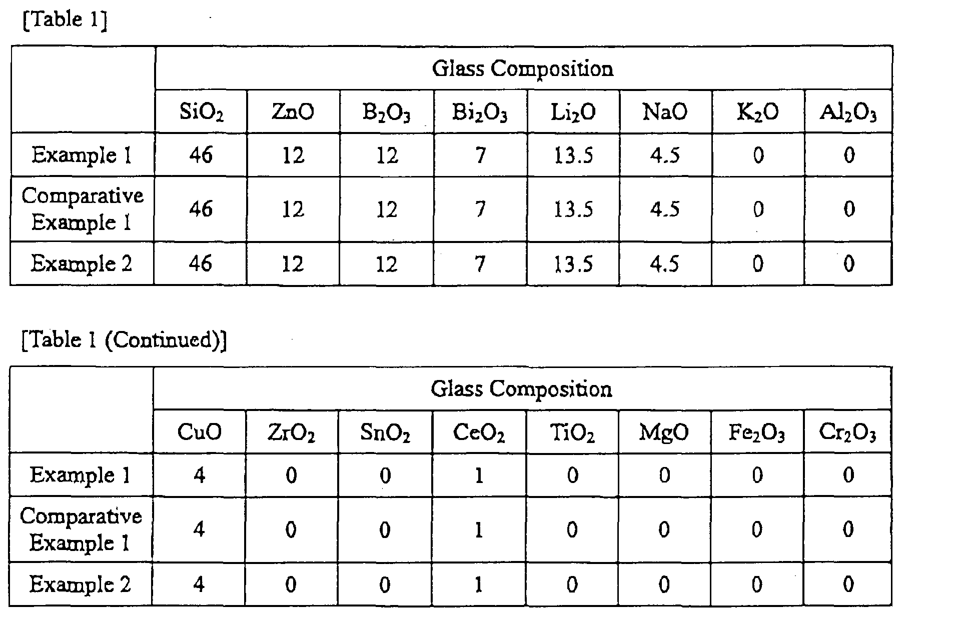

Then, this material mixture was filled into a platinum crucible, and the platinum crucible was placed in an electric furnace. Then, the electric furnace was kept at a temperature of 1150°C to 1450°C for one hour to thereby melt the material mixture. The molten material mixture was rapidly cooled by being passed through stainless steel water-cooling rolls to thereby form glass flakes.

Then, the glass flakes were pulverized by using a ball mill. Specifically, the obtained glass flakes, alumina balls with a diameter of 20 mm and a small amount of water were placed into an alumina pot, and the alumina pot was rotated for approximately 12 hours. After the pulverization was finished, the contents were passed through a sieve to thereby separate the alumina balls. The obtained glass powder was passed through an air shifter to thereby remove coarse particles in the powder. In this manner, fine glass powder from which coarse particles of 10 µm or more have been removed was obtained.

### (Preparation of Ink)

The glass powder obtained by the above-described method was blended with heat-resistant black pigment powder containing a copper (Cu)-chromium (Cr) composite oxide (42-302A, manufactured by Tokan Material Technology Co., Ltd.) and cordierite as a refractory filler, thereby preparing the solid component of the ink. The blending proportion of the glass powder : the pigment powder : the refractory filler in the ratio by weight was 70:27:3.

Then, this solid component was added to the organic vehicle to thereby prepare dispersion liquid. The organic vehicle was prepared by dissolving ethyl cellulose and polyvinyl butyral in a combined solvent of terpineol and 2,2,4-trimethyl-1,3-pentanediol monoisobutyrate. For viscosity adjustment, a solvent was further added to the dispersion liquid. In this manner, the ink for printing was obtained.

Then, the ink was screen-printed on the second surface of the glass substrate. The screen-printing was performed by using a 225-mesh Tetron screen, and the ink was printed along the entire marginal area of the second surface of the glass substrate (80 mm in width). Then, this glass substrate was dried at 140°C for ten minutes.

Then, the ink was subjected to calcination treatment to form the ceramic layer. The calcination treatment was performed by keeping the glass substrate at a temperature of up to 610°C for five minutes. In the heating, the glass substrate was passed through conveyor furnaces kept at three temperature ranges of 550°C, 580°C and 610°C so that the temperature of the glass substrate was increased in a stepwise manner. The glass surface temperature just before cooling measured by a radiation thermometer was 570°C. The thickness of the ceramic layer after the calcination treatment was 12 µm.

Then, the glass substrate after the calcination treatment was subjected to cooling treatment. The cooling treatment was performed by using the cooling apparatus 700 as shown in FIG. 5C. The rollers 710 as the cooling member had a diameter of approximately 40 mm, and were placed at equal intervals of approximately 15 cm. The rollers 710 were made of stainless steel, and to the entire area of its contacting surface with the glass substrate, a cloth made of silica (trade name: Siliglass, manufactured by NIPPON MUKI CO., LTD.) was uniformly attached. For this reason, the surfaces of the rollers 710 were comparatively smooth, and no large irregularities were present. The level difference of the irregularities in one surface was 1 mm or less at most. The conveyance speed of the glass substrate was 0.1 m/sec to 0.5 m/sec (one-way conveyance). The rollers 710 are not positively heated or cooled, and are in a state of being subjected to an uncontrolled atmosphere. Therefore, the rollers 710 are kept at a temperature lower than that of the glass substrate just after the calcination treatment, and functions as the cooling member.

Plural nozzles 720 were placed above the glass substrate with the even interval (every 40 mm) along the conveyance direction of the glass substrate. The nozzles 720 each had an orifice for blowing a cooling air of a pressure of approximately 1 MPa, and the distance from the orifice to the upper surface of the glass substrate was 21 mm.

Plural nozzles 740 were placed below the glass substrate with the even interval (every 40 mm) along the conveyance direction of the glass substrate. The nozzles 740 each had an orifice for blowing a cooling air of a pressure of approximately 1 MPa, and the distance H2 from the orifice to the lower surface of the glass substrate was 45 mm.

After this cooling treatment, a glass substrate was obtained where the ceramic layer with a thickness of approximately 10 µm to 15 µm was baked.

Lastly, an antireflection film (first functional film) where a hard coating layer and an antireflection layer are laminated on the surface of a triacelylcellulose (TAC) film base material was applied to the entire area of the first surface of the glass substrate having the ceramic layer formed on the second surface thereof. The antireflection film was manufactured by Dai Nippon Printing Co., Ltd., and the thicknesses of the antireflection film including the antireflection layer, the hard coating layer and the TAC layer was approximately 92 µm,

By the above-described process, the front plate according to Example 1 was formed.

### (Evaluation)

Then, the degree of the stress strain non-uniformity within the surface of the obtained front plate was evaluated.

The measurement was performed by using the above-described evaluation apparatus shown in FIG. 3.

In the evaluation apparatus 500, as the brightness measurement device 530, a brightness measurement device having a CCD camera (Eye Scale-4W manufactured by I-System Corporation) was used. Between the liquid crystal panel 510 and the brightness measurement device 530, the front plate 100 according to Example 1 was disposed. As the polarizing plate 520, a polarizing film was used, and the polarizing film was placed on the front surface of the brightness measurement device 530.

The front plate 100 was disposed in the evaluation apparatus 500 so that the side where the first functional film (antireflection film) 30A was present (that is, the first surface side) was the side of the brightness measurement device 530. The distance D1 between the liquid crystal panel 510 and the front plate 100 was 50 mm, and the distance D2 between the front plate 100 and the brightness measurement device 530 was 1 m.

The liquid crystal panel 510 was set in a condition that the entire surface was made white by the light emitted from the liquid crystal panel 510. The light emitted from the liquid crystal panel 510 was polarized. The orientation of the polarizing film was set in a condition that the light emitted from the liquid crystal panel 510 was not transmitted toward the brightness measurement device 530 when the front plate 100 was absent, that is, in the crossed Nicol condition. Consequently, when the front plate 100 was absent, the image from the liquid crystal panel 510 transmitted through the polarizing film was recognized as being black.

The brightness measurement device 530 is of a type that captures an image (light) with the CCD camera, and is capable of converting the within-surface brightness of the obtained image into a numerical value. Therefore, by using the brightness measurement device 530, the brightness non-uniformity and the color non-uniformity over the entire surface of the measuring object can be measured. Moreover, the brightness measurement device 530 is characterized in that a result close to the impression of the image recognized by the human eyes is obtained.

For this reason, by photographing the light from the front plate 100 through the polarizing plate 520 or quantitatively evaluating the within-surface distribution of the amount of light observed through the polarizing plate 520 from the front plate 100 by using the evaluation apparatus 500, the presence or absence of the leakage of the light from the polarizing plate 520, that is, the output polarized light disturbance on the front plate 100 can be quantitatively confirmed with high sensitivity.

FIG. 7 shows an example of a photograph taken by using the evaluation apparatus 500. FIG. 8 shows transmittance changes obtained by scanning along the line A-A' of FIG. 7. Likewise, FIG 9 shows transmittance changes obtained by scanning along the line B-B' of FIG. 7, and FIG. 10 shows transmittance changes obtained by scanning along the line C-C'.

In FIGs. 8 to 10, the vertical axis represents the transmittance (%) when the light amount (cd/m²) under the crossed Nicol condition is 0% and the light amount (cd/m²) under the parallel Nicol condition is 100%.

From the photograph of FIG. 7, it is apparent that any output polarized light disturbance hardly occurs when the front plate according to Example 1 is placed. Moreover, from the results of FIGs. 8 to 10, in the case of the front plate according to Example 1, any difference in light amount depending on the positions is hardly observed, and the transmittance (%) is approximately 0.4% at most (FIG. 10).

The difference (ΔT) between the maximum value Tₘₐₓ and the minimum value Tₘᵢₙ of the transmittance was obtained from the results of FIGs. 8 to 10. In FIG 8, ΔT was 0.3%, in FIG. 9, ΔT was 0.2%, and in FIG. 10, ΔT was 0.4%. In particular, in the result of FIG 9, the maximum value Tₘₐₓ of the transmittance was suppressed to approximately less than 0.2% over the entire area, and the amount of transmitted light was extremely small.

As described above, it has been confirmed that with the front plate according to Example 1, the stress strain non-uniformity within the surface is significantly suppressed and because of this, no output polarized light disturbance occurs.

### (Comparative Example 1)

A front plate according to Comparative Example 1 was manufactured by a method similar to that of Example 1, and the degree of the within-surface stress strain non-uniformity of the front plate was evaluated.

However, in Comparative Example 1, the process of cooling the glass substrate after the heat treatment to sinter the ceramic layer is different from Example 1.

That is, in Comparative Example 1, on each of the rollers as the cooling member of the cooling apparatus, a cloth made of silica (trade name: Siliglass) was uniformly wound around the surface contacting with the glass substrate, and around the surface of the cloth, a para-aramid fiber cloth (Kevlar [trademark] cloth) (thickness: 3 mm) for scratch prevention was helically wound in layers. Consequently, parts where the cloth was layered several folds and parts where no cloth was wound coexisted on the surfaces of the rollers as the cooling member. As a result, the surfaces of the rollers had large level differences of approximately 3 mm at most

In the cooling process, when the glass substrate was conveyed on the rollers as the cooling member, a part that was completely out of contact with the rollers was present on the surface of the glass substrate. That is, the glass substrate was brought into contact with the rollers and cooled under a condition where the entire surface is non-uniform.

Conditions such as the diameter and arrangement pitch of the rollers were set similarly to those of Example 1. The conveyance speed of the glass substrate was in a range of 0.1 m/sec to 0.5 m/sec (one-way conveyance).
Moreover, conditions such as the arrangement pitch, the pressure of the cooling air and the distance from the glass substrate of the upper and lower nozzles were also set similarly to those of Example 1.

The results of the evaluation of the front plate according to Comparative Example 1 are shown in FIGs. 11 to 14. FIG. 11 shows an example of a photograph of the within-surface image taken by using the evaluation apparatus 500. FIG. 12 shows transmittance changes obtained by scanning along the line A-A' of FIG 11. Likewise, FIG 13 shows transmittance changes obtained by scanning along the line B-B' of FIG 11, and FIG. 14 shows transmittance changes obtained by scanning along the line C-C' of FIG. 11. In FIGs. 12 to 14, the vertical axis represents the transmittance (%) when the light amount (cd/m²) under the crossed Nicol condition is 0% and the light amount (cd/m²) under the parallel Nicol condition is 100%.

From the photograph of FIG 11, it is apparent that when the front plate according to Comparative Example 1 is placed in front of the liquid crystal panel 510, an output polarized light disturbance occurs and within the surface, parts that appear bright are present as streaks.

Moreover, from the results of FIGs. 12 to 14, in the case of the front plate according to Comparative Example 1, the difference in light amount depending on the within-surface positions clearly occurs; in particular, in FIGs. 12 and 14, periodical peaks of transmittance are observed. A high peak transmittance reaches 0.7% (FIG. 12).

The difference (ΔT) between the maximum value Tₘₐₓ and the minimum value Tₘᵢₙ of the transmittance was obtained from the results of FIGs. 12 to 14. In FIG 12, ΔT was 0.7%, in FIG. 13, ΔT was 0.4%, and in FIG. 14, ΔT was 0.6%.

From the above, it has been confirmed that the front plate according to Comparative Example 1 has the stress strain non-uniformity at an unignorable level within the surface and this causes an output polarized light disturbance.

### (Example 2)

A front plate according to Example 2 was manufactured by a method similar to that of Example 1, and the degree of the stress strain non-uniformity of this front plate was evaluated.

However, in Example 2, calcination treatment of the ink for forming the ceramic layer and the process of cooling the glass substrate were different from those of Example 1.

That is, in Example 2, the calcination treatment of the ink was performed while the glass substrate was kept at an ambient temperature of 640°C for 280 seconds.

In heating, first, the glass substrate was conveyed to a heating section kept at 640°C by an induction conveyor. In the heating section, the conveyance direction of the conveyor was reversed at regular intervals. Therefore, the conveyance direction of the glass substrate was periodically reversed. The duration length of the glass substrate in the heating section was 280 seconds. The surface temperature of the glass substrate just before the next process (cooling process) which temperature was measured by a radiation thermometer was 610°C.

Then, the glass substrate was cooled. Cooling was performed by using the cooling apparatus 700 as shown in FIG. 5C.
However, in Example 2, after the glass substrate was conveyed into the cooling apparatus, the rotation direction of the rollers 710 was reversed at regular intervals in the cooling apparatus. Therefore, the glass substrate was periodically reserved in the horizontal direction in the cooling apparatus. The cooling period was 280 seconds.

The rollers 710 had a diameter of approximately 40 mm, and were placed with intervals of approximately 10 cm. The rollers 710 were made of stainless steel, and to the entire area of its contacting surface with the glass substrate, a cloth made of silica (trade name: Siliglass) was uniformly attached. For this reason, the surfaces of the rollers as the cooling member were comparatively smooth, and no large irregularities were present. The difference of the irregularities in the substrate side was 1 mm or less at most.

The conveyance speed of the glass substrate was 0.1 m/sec to 0.5 m/sec (in both forward and reverse directions). The rollers 710 are not positively heated or cooled, and are in a state of being subjected to an uncontrolled atmosphere. Therefore, the rollers 710 are kept at a temperature lower than that of the glass substrate having just after the calcination treatment, and functions as the cooling member.

In the upside of the glass substrate, plural nozzles 720 were placed with the even interval (every 40 mm) along the conveyance direction of the glass substrate. The nozzles 720 each had an orifice for blowing a cooling air of a pressure of approximately 1 MPa, and the distance H1 from the orifice to the upper surface of the glass substrate was 33 mm.

In downside of the glass substrate, plural nozzles 740 were placed with the even interval (every 40 mm) along the conveyance direction of the glass substrate. The nozzles 740 each had an orifice for blowing a cooling air of a pressure of approximately 1 MPa, and the distance H2 from the orfice to the lower surface of the glass substrate was 100 mm.

After this cooling treatment, a glass substrate was obtained where the ceramic layer with a thickness of approximately 10 µm to 15 µm was baked.

The results of the evaluation of the front plate according to Example 2 are shown in FIGs. 15 to 18. FIG. 15 shows an example of a photograph of the within-surface image taken by using the evaluation apparatus 500. FIG 16 shows transmittance changes obtained by scanning along the line A-A' of FIG 15. Likewise, FIG. 17 shows transmittance changes obtained by scanning along the line B-B' of FIG 15, and FIG. 18 shows transmittance changes obtained by scanning along the line C-C' of FIG. 15. In FIGs. 16 to 18, the vertical axis represents the transmittance (%) when the light amount (cd/m²) under the crossed Nicol condition is 0% and the light amount (cd/m²) under the parallel Nicol condition is 100%.

From the photograph of FIG. 15, it is apparent that any output polarized light disturbance hardly occurs when the front plate according to Example 2 is placed. Moreover, from the results of FIGs. 16 to 18, in the case of the front plate according to Example 2, any difference in light amount depending on the positions is hardly observed, and the transmittance (%) is approximately 0.16% at most (FIG. 16).

The difference (ΔT) between the maximum value Tₘₐₓ and the minimum value Tₘᵢₙ of the transmittance was obtained from the results of FIGS. 16 to 18. In FIG. 16, ΔT was 0.16%, in FIG. 17, ΔT was 0.1%, and in FIG. 18, ΔT was 0.1 %.

As described above, it has been confirmed that with the front plate according to Example 2, the stress strain non-uniformity within the surface is significantly suppressed and because of this, no output polarized light disturbance occurs.

While the invention has been described in detail and with reference to specific embodiments thereof, it will be apparent to one skilled in the art that various changes and modifications can be made therein without departing from the spirit and scope thereof.
The present application is based on Japanese Patent Application No. 2010-053688 filed on March 10, 2010 and Japanese Patent Application No. 2011-023360 filed on February 4, 2011, and the entire contents are incorporated herein by reference.

### INDUSTRIAL APPLICABILITY

The front plate according to the present invention is applicable to FPD devices such as liquid crystal displays, plasma displays, organic electroluminescent displays and mobile displays.

### DESCRIPTION OF REFERENCE NUMERALS AND SIGNS

- 10: Front plate
- 15A: Front side of the front plate
- 15B: Rear side of the front plate
- 20: Glass substrate
- 21A: First surface of the glass substrate
- 21B: Second surface of the glass substrate
- 30A: First functional film
- 30B: Second functional film
- 40: Ceramic layer
- 100: Front plate
- 200: Cooling apparatus
- 210: Roller
- 300: Display device
- 390: Display panel
- 500: Evaluation apparatus
- 510: Liquid crystal panel
- 520: Polarizing plate
- 530: Brightness measurement device
- 600: Cooling apparatus
- 610: Roller
- 619: Second cooling means
- 620: Nozzle
- 630: Cooling air
- 700: Cooling apparatus
- 710: Roller
- 719: Second cooling means
- 720: Nozzle
- 730: Cooling air
- 739: Third cooling means
- 740: Nozzle

## Claims

1. A front plate for a display comprising: a glass substrate having a first surface and a second surface; and a ceramic layer formed on at least a part of a marginal area of the second surface, wherein the front plate has a difference (ΔT) between a maximum light amount Tₘₐₓ and a minimum light amount Tₘᵢₙ of transmitted light of 0.4% or smaller,
wherein the light amount of transmitted light is measured in a measurement system comprising:
a liquid crystal panel that is made to be of entire-surface white-light emission state and is emitting the white light with polarization;
a polarizing plate that is set in a crossed Nicol condition with respect to the polarized white light emitted from the liquid crystal panel; and
a brightness measurement device arranged in this order,
wherein the front plate is disposed between the liquid crystal panel and the polarizing plate so that the second surface faces the liquid crystal panel, while setting the distance between the liquid crystal panel and the front plate to be 50 mm and the distance between the front plate and the brightness measurement device to be 1 m, and
wherein the measurement of the transmitted light amount is carried out by measuring the light amount of light transmitted from through the front plate and the polarizing plate over the entire surface of the front plate by the brightness measurement device, and the light amounts in the absence of the front plate under a crossed Nicol condition and a parallel Nicol condition are taken as 0% and 100%, respectively.

2. The front plate according to claim 1, wherein the maximum value Tₘₐₓ of the amount of transmitted light is 0.5 % or less.

3. The front plate according to claim 1 or 2, wherein the second surface of the glass substrate has the ceramic layer formed throughout the entire marginal area thereof.

4. The front plate according to any one of claims 1 to 3, having a functional film installed on at least one of the first surface and the second surface.

5. A display device comprising a display panel and a front plate disposed in front of the display panel,
wherein the front plate is the front plate according to any one of claims 1 to 4, and
the front plate is disposed so that the second surface of the glass substrate faces the display panel.

6. The display device according to claim 5, having a 3D (three-dimensional) function.

7. A method for manufacturing a front plate for a display comprising a glass substrate and a ceramic layer that is formed on at least a part of a marginal area of the glass substrate, the method comprising:
(a) a step of preparing a glass substrate having a first surface and a second surface;
(b) a step of placing a composition containing ceramic particles, on at least a part of a marginal area of the second surface of the glass substrate;
(c) a step of forming the ceramic layer by heating the composition-placed glass substrate; and
(d) a step of cooling the ceramic layer-formed glass substrate so that the first surface is uniformly cooled.

8. The manufacturing method according to claim 7, wherein the cooling step (d) is carried out in such a manner that the entire area of the first surface of the glass substrate undergoes substantially the same cooling history.

9. The manufacturing method according to claim 8, wherein the cooling step (d) is carried out in such a manner that the entire area of the first surface of the glass substrate is brought into contact with a cooling member.

10. The manufacturing method according to claim 9, wherein the cooling member comprises plural rollers, and the glass substrate is cooled by being conveyed on the plural rollers, and
wherein the conveyance of the glass substrate is carried out in such a manner that each and every part of the first surface comes into contact with any of the plural rollers.

11. The manufacturing method according to claim 10, wherein each of the plural rollers has no level difference of 1 mm or more on its contacting surface with the glass substrate.

12. The manufacturing method according to claim 10 or 11, wherein the cooling step (d) further comprises a step of blowing a cooling air to the second surface of the glass substrate through the plural nozzles that are positioned in a side facing the second surface of the glass substrate.

13. The manufacturing method according to claim 12, wherein the cooling step (d) further comprises a step of blowing a cooling air to the first surface of the glass substrate through the plural nozzles that are positioned in a side facing the first surface of the glass substrate.

14. The manufacturing method according to any one of claims 7 to 13, wherein the composition-placing step (b) comprises a step of screen-printing an ink containing ceramic particles, with respect to the second surface of the glass substrate.

15. The manufacturing method according to any one of claims 7 to 14, wherein the ceramic layer-forming step (c) comprises a step of heating the glass substrate having the composition placed thereon, in a range of 500°C to 650°C.

16. The manufacturing method according to any one of claims 7 to 15, further comprising:
(e) a step of installing a functional film on either or both of the first surface and the second surface of the glass substrate.

17. A manufacturing apparatus for manufacturing a front plate for a display comprising a glass substrate and a ceramic layer formed on at least a part of a marginal area of the glass substrate, the apparatus comprising:
a heating section for heating a glass substrate having a first surface and a second surface; and
a cooling section for cooling the heated glass substrate,
wherein the heating section heats a composition containing ceramic particles placed on at least a part of a marginal area of the second surface of the glass substrate to thereby form the ceramic layer,
the cooling section cools the ceramic layer-formed glass substrate,
the cooling section comprises plural rollers arranged so as to face the first surface of the glass substrate on which plural rollers the glass substrate is conveyed and thereby cooled, and
wherein the cooling of the glass substrate is carried out in such a manner that the entire area of the first surface of the glass substrate undergoes substantially the same cooling history by bringing each and every part of the first surface into contact with any of the plural rollers in the cooling section.
